# EUROPÄISCHE PATENTANMELDUNG

(11) **EP 4 530 440 A1**
(43) Veröffentlichungstag der Anmeldung: **02.04.2025**
(21) Anmeldenummer: 24199959.8
(22) Anmeldetag: 12.09.2024
(51) Int. Cl.: F01D 25/00, F01D 25/28

(54) **VORRICHTUNG UND VERFAHREN ZUR MONTAGE UND DEMONTAGE VON BAUTEILEN EINES FLUGZEUGTRIEBWERKS**

(30) Priorität: 12.09.2023 DE 102023124522
(71) Anmelder: Lufthansa Technik AG, 22335 Hamburg (DE)
(72) Erfinder: Scherzinger, Kai Malte, 22929 Hamfelde (DE); Wedemann, Marcus, 29633 Munster (DE); Schmieder, Sören, 25451 Quickborn (DE)
(74) Vertreter: Glawe, Delfs, Moll

(57) **Zusammenfassung**

Die Erfindung betrifft eine Vorrichtung (1) zur Montage und Demontage von Bauteilen eines Flugzeugtriebwerks.

Die Vorrichtung (1) umfasst einen Querträger (10) zur Anbindung an ein Hebezeug, eine sich von dem Querträger (10) erstreckende Hauptstrebe (20) und eine am freien Ende der Hauptstrebe (20) unter einem Winkel anschließende Querstrebe (30), die an ihrem freien Ende zur Anbindung von Adaptern (2), Halteelementen (3) oder Bauteilen eines Flugzeugtriebwerks ausgebildet ist. Die Hauptstrebe (20) ist zweigeteilt mit einem zwischen den beiden Teilen (22, 23) angeordneten Gelenk (24) derart ausgebildet, dass die Querstrebe (30) bei Betätigung des Gelenks (24) ausgehend von dessen gestreckten Zustand in Richtung des Querträgers (10) bewegbar ist.

## Beschreibung

Die Erfindung betrifft eine Vorrichtung und ein Verfahren zur Montage und Demontage von Bauteilen eines Flugzeugtriebwerks.

Auch zwischen regelmäßig vorgesehenen Generalrevisionen eines Flugzeugtriebwerks, bei der das Triebwerk praktisch vollständig zerlegt und jedes Bauteil auf Beschädigungen hin untersucht und bei Bedarf instandgesetzt oder ausgetauscht wird, kann es erforderlich sein, einzelne Triebwerksbauteile aufgrund von Beschädigungen vorzeitig auszutauschen. Dabei sind zum Austausch diverser Bauteile eines Triebwerkes bestimmte Demontage- und Montageprozeduren vorgegeben, mit denen ein möglichst zügiger Austausch der betroffenen Bauteile möglich sein soll. Zur Durchführung dieser Prozeduren können auch Spezialwerkzeuge und/oder sonstige Hilfsmittel vorgesehen bzw. vorgeschrieben sein. Auch wird vorgegeben, ob das Triebwerk für einen entsprechenden Bauteilaustausch am Flügel des Flugzeugs verbleiben kann ("on-wing") oder ob der Bauteilaustausch in einem vom Flugzeug separierten Zustand des Triebwerks in einer dafür qualifizierten Werkstatt ("in-shop") durchgeführt werden muss.

Im Stand der Technik ist bspw. eine Prozedur zum Austausch des Getriebesystems der ersten Schaufelblattstufe eines Flugzeugtriebwerks ("fan drive gear system", FDGS) bekannt, für die vorgegeben ist, dass sich das Triebwerk im vom Flugzeug separierten Zustand in einer Werkstatt befinden muss. Nach Entfernen der Triebwerksverkleidung, insbesondere im Bereich des Triebwerkseinlasses, müssen nacheinander mehrere Bauteile, in der Regel zumindest die Schaufelblattnabe, ein Lagergehäuse und wenigstens ein Lager entfernt werden, bevor das auszutauschende Getriebesystem entfernt werden kann. Anschließend müssen die genannten Komponenten in unterschiedlicher Reihenfolge wieder montiert werden, wobei sämtliche defekte Bauteile durch entsprechende Austauschteile ersetzt werden können.

Für die genannte Prozedur werden Spezialwerkzeuge und Hilfsmittel bereitgestellt, die für die Verwendung in geeignet ausgestatteten Werkstätten ausgelegt sind, mithin also für Werkstätten zur Triebwerksüberholung, welche unter anderem über Gestelle zur Halterung von Triebwerken im vom Flugzeug getrennten Zustand verfügen.

Nachteilig an diesem Stand der Technik ist, dass zum Austausch eines Getriebesystems für die erste Schaufelblattstufe eines Flugzeugtriebwerks zunächst das Triebwerk als solches demontiert werden muss, was regelmäßig zu einer erheblichen Standzeit für das Flugzeug führt.

Aufgabe der vorliegenden Erfindung ist es, eine Möglichkeit zu schaffen, bei der die Nachteile aus dem Stand der Technik nicht mehr oder nur noch in verminderten Umfang auftreten.

Diese Aufgabe wird gelöst durch eine Vorrichtung gemäß Anspruch 1 sowie ein Verfahren gemäß Anspruch 9. Vorteilhafte Weiterbildungen sind Gegenstand der abhängigen Ansprüche.

Demnach betrifft die Erfindung eine Vorrichtung zur Montage und Demontage von Bauteilen eines Triebwerks umfassend einen Querträger zur Anbindung an ein Hebezeug, eine sich von dem Querträger erstreckende Hauptstrebe und eine am freien Ende der Hauptstrebe unter einem Winkel anschließende Querstrebe, die an ihrem freien Ende zur Anbindung von Adaptern, Halteelementen oder Bauteilen eines Flugzeugtriebwerks ausgebildet ist, wobei die Hauptstrebe zweigeteilt mit einem zwischen den beiden Teilen angeordneten Gelenk derart ausgebildet ist, dass die Querstrebe bei Betätigung des Gelenks in Richtung des Querträgers bewegbar ist.

Weiterhin betrifft die Erfindung ein Verfahren zur Montage und Demontage von Bauteilen eines Flugzeugtriebwerks, wobei zur Montage und Demontage wenigstens eines Bauteils eine erfindungsgemäße Vorrichtung im gestreckten Zustand des Gelenks der Hauptstrebe verwendet wird und sich das Flugzeugtriebwerk am Flügel eines Flugzeugs befindet.

Die Erfindung hat erkannt, dass eine Prozedur zum Austausch bspw. eines Getriebesystems für die erste Schaufelblattstufe eines Flugzeugtriebwerks, wie sie aus dem Stand der Technik bekannt ist, grundsätzlich auch im am Flugzeug montierten Zustand des Flugzeugtriebwerks und/oder mit montierter Triebwerksverkleidung durchgeführt werden kann. Gleichzeitig hat die Erfindung auch erkannt, dass dafür die bekannten Spezialwerkzeuge und Hilfsmittel teilweise anders dimensioniert werden müssen, wobei eine entsprechende Neudimensionierung zumindest eines Teils der Hilfsmittel deren Handhabbarkeit derart stark reduzieren würde, dass sich gegenüber der Durchführung der bekannten Prozedur kaum noch ein Vorteil einstellen würde. Die Handhabbarkeit der Hilfsmittel bezieht sich dabei insbesondere auch auf deren Transport zu einem Verwendungsort. Ist eine gute Handhabbarkeit auch für Transportzwecke vorhanden, müssen die Hilfsmittel nicht an jedem denkbaren Einsatzort vorgehalten werden, sondern können bei Bedarf kurzfristig zu einem beliebigen Einsatzort transportiert werden.

Um die beschriebene Handhabbarkeit bei der erfindungsgemäßen Vorrichtung zu gewährleisten, ist vorgesehen, die sich zwischen dem Querträger und der Querstrebe erstreckende Hauptstrebe derart über ein Gelenk in zwei Teile zu unterteilen, dass sich bei Bedarf die Querstrebe durch Betätigung des Gelenkes in Richtung des Querträgers bewegen lässt. Durch das Vorsehen eines solchen Gelenkes lässt sich ein gegenüber dem vollständig ausgeklappten Zustand, in dem die Vorrichtung zur Durchführung der gewünschten Prozedur geeignet ausgebildet und konfiguriert ist, ein deutlich geringeres Packmaß erreichen, welches nicht nur den eigentlichen Transport der Vorrichtung, sondern auch deren Handhabung in Vorbereitung zur Durchführung der gewünschten Prozedur deutlich erleichtert.

Bei der Vorrichtung ist besonders bevorzugt, wenn das Gelenk für den vollständig gestreckten Zustand - also den Zustand, der für die Durchführung der Prozedur vorgesehen ist und bei dem sich die Querstrebe in der gewünschten Endposition bei einer Bewegung weg vom Querträger befindet - einen Anschlag aufweist. Durch einen solchen Anschlag kann sichergestellt werden, dass die bei der Verwendung der Vorrichtung gemäß der vorgeschriebenen Prozedur in der Hauptstrebe auftretende Belastungen wenigstens teilweise unmittelbar über den Anschlag abgeleitet werden können. Darüber hinaus kann durch einen solchen Anschlag sichergestellt werden, dass sich das Gelenk zumindest bei Kraftschluss über den Anschlag nicht mehr bewegt und somit die Hauptstrebe formstabil ist.

Es ist bevorzugt, wenn die Achse des Gelenks senkrecht zu wenigstens zwei, vorzugsweise zu sämtlichen der Längsachse von Hauptstrebe, Querträger und/oder Querstrebe verläuft. Durch eine entsprechende Anordnung der Gelenksachse ist in der Regel sichergestellt, dass die durch das Gelenk ermöglichte Schwenkbewegung in bzw. parallel zu einer Ebene abläuft, in der wenigstens zwei der Komponenten von Hauptstrebe, Querträger und Querstrebe liegen, sodass sich durch eine Betätigung des Gelenks die Ausdehnung der Vorrichtung senkrecht zu dieser Ebene praktisch nicht ändert.

Vorzugsweise ist das Gelenk zur Sicherung im vollständig gestreckten und/oder vollständig eingeklappten Zustand ausgebildet. Dadurch wird sichergestellt, dass sich das Gelenk nach erfolgter Sicherung nicht mehr aus einem der genannten Endpositionen ungewollt wegbewegen kann. Zur Sicherung kann ein formschlüssig wirkendes Sicherungselement vorgesehen sein. Bspw. kann ein Sicherungsstift durch geeignete Öffnungen im Gelenk und/oder wenigstens einem der beiden Teile der Hauptstrebe geführt werden.

Da sich die erfindungsgemäße Vorrichtung aufgrund des vorgesehenen Gelenks zusammenlegen lässt, womit sich das Packmaß der Vorrichtung gegenüber dem ausgeklappten Zustand auf eine besser handhabbare Größe reduzieren lässt, sind Querträger, Hauptstrebe und Querstrebe bevorzugt derart dimensioniert, dass die Querstrebe oder ein daran angeschlossener Adapter bei Verwendung der Vorrichtung mit an der Triebwerksachse eines Flugzeugtriebwerks angeordneten Bauteilen oder daran befestigte Halteelemente verbunden werden kann, ohne dass die Verkleidung des Triebwerks oder auch nur Teile davon entfernt werden müssten. Selbst wenn eine aus dem Stand der Technik bekannte, entsprechend redimensionierte Vorrichtung aufgrund der daraus resultierenden Größe praktisch nicht mehr handhabbar wäre, ist bei der erfindungsgemäßen Vorrichtung die Handhabbarkeit durch das vorgesehene Gelenk an der Hauptstrebe gegeben.

Um sicherzustellen, dass die Vorrichtung bei ihrer Verwendung unabhängig von dem mit der Vorrichtung gegebenenfalls verbundenen Adapter oder an der Vorrichtung bzw. einem Adapter befestigten Bauteilen eine gewünschte Lage gegenüber der horizontalen einnimmt bzw. beibehält, ist bevorzugt, wenn zur Anbindung an ein Hebezeug ein entlang des Querträgers verschiebbare Schlitten mit einem Anbindungspunkt für ein Hebezeug vorgesehen ist. Durch geeignetes Verschieben des Schlittens lassen sich aufgrund von an die Vorrichtung angehängten Massen entstehende Momente ausgleichen und eine gewünschte Lage der Vorrichtung gegenüber der Horizontalen erreichen.

Um sicherzustellen, dass eine so einmal eingestellte Lage gegenüber der Horizontalen bestehen bleibt, aber auch um diese Lage noch während der Verwendung der Vorrichtung bei Bedarf sicher und genau verändern zu können, ist weiter bevorzugt, wenn eine selbstsperrende Mechanik zum Verschieben des Schlittens entlang des Querträgers vorgesehen ist. Die Mechanik kann hierzu bspw. eine Gewindespindel umfassen, die auch während der Verwendung der Vorrichtung noch kontrolliert rotiert werden kann. Die Gewindespindel kann dazu unmittelbar, d. h. unmittelbar entlang der Achse der Gewindespindel, betätigt werden. Es kann aber auch ein Umlenkgetriebe vorgesehen sein, mit der die Betätigung der Gewindespindel oder einer anderen Mechanik auch um eine andere, ergonomisch ggf. besser geeignete Achse betätigen lässt. Auch das Umlenkgetriebe kann selbstsperrend, bspw. als Schneckengetriebe, ausgeführt sein.

Zur Erläuterung des erfindungsgemäßen Verfahrens wird auf die vorstehenden Ausführungen verwiesen, aus denen sich bereits die ordnungsgemäße Verwendung der Vorrichtung ergibt: Die Vorrichtung wird an ihrem Querträger an ein Hebezeug angebunden und so an das zu montierende oder demontierende Bauteil herangeführt, dass es am freien Ende der Querstrebe ggf. unter Zuhilfenahme von Adaptern mit diesem oder an diesen vorgesehenen Halteelementen verbunden werden kann. Ist eine entsprechende Anbindung erfolgt, kann das Bauteil zur Montage oder Demontage zum Flugzeugtriebwerk hin oder von diesem wegbewegt werden.

Bei dem mithilfe der Vorrichtung montierten oder demontierten Bauteil kann es sich insbesondere um Getriebesystems für die erste Schaufelblattstufe des Flugzeugtriebwerks, die Schaufelblattnabe, ein Lagergehäuse und/oder ein Lager handeln.

Die Erfindung wird nun anhand eines bevorzugten Ausführungsbeispiels unter Bezugnahme auf die beigefügten Zeichnungen beispielhaft beschrieben. Es zeigen:
- Figur 1:: eine schematische Darstellung eines ersten Ausführungsbeispiels einer erfindungsgemäßen im zur Verwendung bereiten Zustand; und
- Figur 2:: eine schematische Darstellung der Vorrichtung aus Figur 1 im zusammengeklappten Zustand.

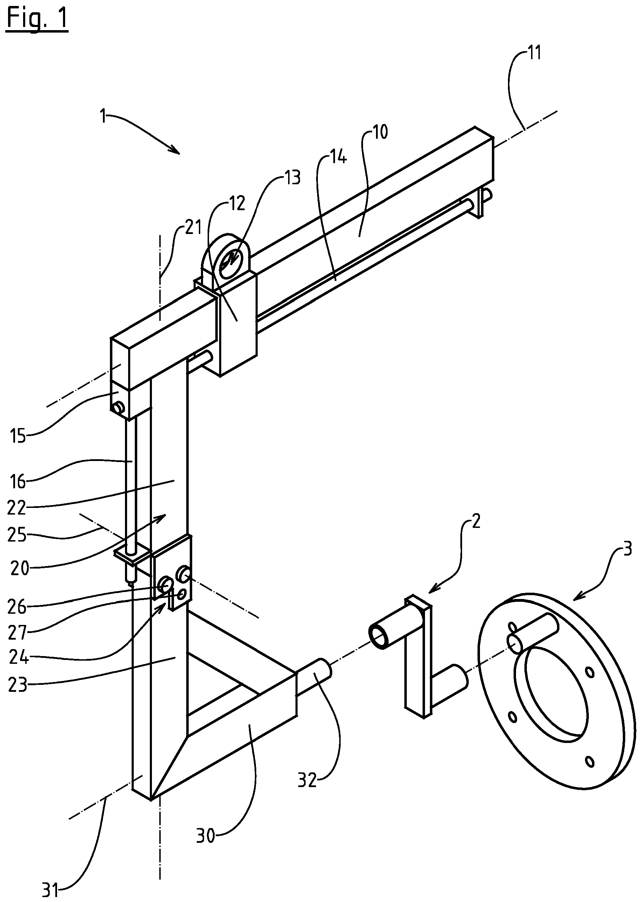

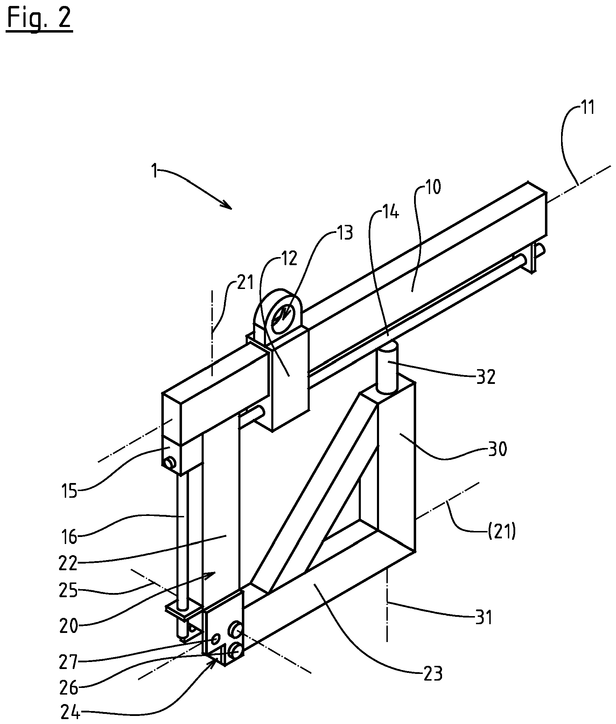

In Figuren 1 und 2 ist eine erfindungsgemäße Vorrichtung 1 zur Montage und Demontage von Bauteilen eines Flugzeugtriebwerks schematisch dargestellt.

Die Vorrichtung 1 umfasst einen Querträger 10, eine sich davon senkrecht erstreckende Hauptstrebe 20 und eine am freien Ende der Hauptstrebe 20 angebundene Querstrebe 30. Die Längsachsen 11, 21, 31 von Querträger 10, Hauptstrebe 20 und Querstrebe 30 liegen in einer gemeinsamen Ebene. Im in Figur 1 dargestellten zur Verwendung bereiten Zustand der Vorrichtung sind die Längsachsen 11, 31 von Querträger 10 und Querstrebe 30 parallel.

Am Querträger 10 ist ein entlang des Querträgers 10 verschiebbare Schlitten 12 angeordnet. An dem Schlitten 12 ist eine Öse 13 zur Anbindung der Vorrichtung 1 an ein Hebezeug (nicht dargestellt) vorgesehen. Der Schlitten 12 lässt sich über die Gewindespindel 14 entlang des Querträgers 10 bewegen. Durch die Gewindespindel 14 wird eine selbstsperrende Mechanik zum Verschieben des Schlittens 12 sichergestellt, da sich der Schlitten 12 zwar bei Rotation der Gewindespindel 14 bewegt, eine andere auf den Schlitten 12 einwirkende Kraft in Richtung der Längsachse 11 des Querträgers 10 jedoch keine Bewegung des Schlittens 12 zur Folge hat.

Die Gewindespindel 14 ist über ein Umlenkgetriebe 15 mit einer Betätigungswelle 16 verbunden, die auch während der Verwendung der Vorrichtung 1 gut erreichbar ist. Wird am freien Ende der Betätigungswelle 16 bspw. eine Kurbel (nicht dargestellt) angebunden, lässt sich der Schlitten 12 auch während der Verwendung der Vorrichtung 1 noch entlang des Querträgers 10 verschieben.

Am freien Ende der Querstrebe 30 ist ein aus der Querstrebe 30 herauskragender, fest mit dieser verbundener Stift 32 vorgesehen, an dem sich dafür ausgebildete Adapter 2 anbinden lassen. Die Adapter 2 lassen sich auf der anderen Seite mit Halteelementen 3 verbinden, die an dem zu entfernen oder zu montierenden Bauteile (nicht dargestellt) befestigt werden können. Es ist aber auch möglich, dass sich ein Adapter 2 unmittelbar mit einem zu entfernen oder zu montierenden Bauteil oder das Halteelement 3 unmittelbar mit der Querstrebe 20 verbinden lässt. Ebenso ist es bei geeigneter Ausgestaltung des zu montierenden oder zu entfernen Bauteils möglich, dass dieses unmittelbar und insbesondere ohne Adapter 2 oder Halteelemente 3 mit der Querstrebe 30 bzw. dem Stift 32 verbunden wird.

Die Hauptstrebe 20 der Vorrichtung 1 ist zweigeteilt ausgeführt, wobei sich die beiden Teile 22, 23 der Hauptstrebe 20 mithilfe eines zwischen den beiden angeordneten Gelenks 24 zueinander verschwenken lassen. Die Schwenkachse 25 des Gelenks 24 läuft dabei senkrecht zu den Längsachsen 11, 21,31 von Querträger 10, Hauptstrebe 20 (bzw. derer beiden Teile 22, 23) und Querstrebe 30.

Das Gelenk 24 ist dabei so ausgestaltet, dass die Stirnflächen der beiden Teile 22,23 der Hauptstrebe 20 im vollständig gestreckten Zustand des Gelenks 24, wie er in Figur 1 dargestellt ist, auf Stoß aneinander liegen. Das Gelenk 24 weist somit einen Anschlag für den vollständig gestreckten Zustand auf, über den insbesondere im belasteten Zustand der Vorrichtung 1, d. h. in einem Zustand, an dem ein Bauteil an der Querstrebe 30 hängt, ein nicht unerheblicher Kraftfluss erfolgt.

Insbesondere das zur Sicherung der Hauptstrebe 20 im gestreckten Zustand vorgesehene Sicherungselement 26, welches durch geeignete Öffnungen 27 und dem zweiten Teil 23 der Hauptstrebe 20 geführt ist, um eine Form Schluss herzustellen, muss aufgrund des beschriebenen Anschlages im belasteten Zustand der Vorrichtung 1 keine oder nur geringe Kräfte übertragen.

Das Sicherungselement 26 kann auch dazu genutzt werden, das Gelenk 24 im in Figur 2 dargestellten eingeklappten Zustand zu sichern.

Um das Gelenk 24 von dem in Figur 1 dargestellten Zustand zu demjenigen in Figur 2 zu bewegen, wird zunächst das Sicherungselement 26 entfernt, die Querstrebe 30 in Richtung des Querträgers 10 bewegt und anschließend das Sicherungselement 24 wieder in die geeigneten Öffnungen 27 und dem zweiten Teil 23 der Hauptstrebe 20 gesteckt.

Der Querträger 10, die Hauptstrebe 20 und die Querstrebe 30 sind derart dimensioniert, dass sich die Vorrichtung 1 mit oder ohne Adapter 2 und/oder Halteelemente 3 mit an der Triebwerksachse angeordneten Bauteilen eines Flugzeugtriebwerks verbinden lassen, ohne dass dafür die Verkleidung des Triebwerks oder auch nur Teile davon entfernt werden müssen. In der Folge weist die Vorrichtung 1 in dem zur entsprechenden Verwendung geeigneten Zustand, wie er in Figur 1 dargestellt ist, eine Ausdehnung auf, die zwar eine Handhabung der Vorrichtung 1 in von einem Hebezeug (nicht dargestellt) getragenen Zustand ermöglicht. Hängt die Vorrichtung 1 jedoch nicht an einem Hebezeug, sind die Abmaße der Vorrichtung im Zustand gemäß Figur 1 jedoch derart, dass nicht von einer guten Handhabbarkeit ausgegangen werden kann.

Die gute Handhabbarkeit wird jedoch erreicht, indem die Vorrichtung 1 vom in Figur 1 gezeigten Zustand in denjenigen der Figur 2 überführt wird. Weisen Querträger 10 und Hauptstrebe 20 in dem in Figur 1 gezeigten Zustand bspw. eine Länge von ca. 2 m bzw. ca. 1,9 m auf, womit sich ein Packmaß von 2m x 1,9m x 0,1m ergibt, lässt sich das Packmaß durch Nutzung des Gelenks auf ca. 2m x 1,2m x 0,1 m reduzieren, was deutlich einfacher in der Handhabung ist.

## Patentansprüche

1. Vorrichtung (1) zur Montage und Demontage von Bauteilen eines Flugzeugtriebwerks umfassend einen Querträger (10) zur Anbindung an ein Hebezeug, eine sich von dem Querträger (10) erstreckende Hauptstrebe (20) und eine am freien Ende der Hauptstrebe (20) unter einem Winkel anschließende Querstrebe (30), die an ihrem freien Ende zur Anbindung von Adaptern (2), Halteelementen (3) oder Bauteilen eines Flugzeugtriebwerks ausgebildet ist,
**dadurch gekennzeichnet, dass**
die Hauptstrebe (20) zweigeteilt mit einem zwischen den beiden Teilen (22, 23) angeordneten Gelenk (24) derart ausgebildet ist, dass die Querstrebe (30) bei Betätigung des Gelenks (24) ausgehend von dessen gestreckten Zustand in Richtung des Querträgers (10) bewegbar ist.

2. Vorrichtung nach Anspruch 1,
**dadurch gekennzeichnet, dass**
das Gelenk (24) einen Anschlag für den vollständig gestreckten Zustand umfasst.

3. Vorrichtung nach einem der vorhergehenden Ansprüche,
**dadurch gekennzeichnet, dass**
die Achse (25) des Gelenks (24) senkrecht zu wenigstens zwei, vorzugsweise zu sämtlichen der Längsachsen (11, 21, 31) des Querträgers (10), der Hauptstrebe (20) und/oder der Querstrebe (30) verläuft.

4. Vorrichtung nach einem der vorhergehenden Ansprüche,
**dadurch gekennzeichnet, dass**
das Gelenk (24) zur Sicherung im vollständig gestreckten und/oder einem vollständig eingeklappten Zustand ausgebildet ist, vorzugsweise durch ein formschlüssig wirkendes Sicherungselement (26).

5. Vorrichtung nach einem der vorhergehenden Ansprüche,
**dadurch gekennzeichnet, dass**
Querträger (10), Hauptstrebe (20) und Querstrebe (30) derart dimensioniert sind, dass die Querstrebe (30) oder ein daran angeschlossener Adapter (2) bei Verwendung der Vorrichtung (1) mit an der Triebwerksachse angeordneten Bauteilen oder daran befestigte Halteelemente (3) verbunden werden kann, ohne dass die Verkleidung des Flugzeugtriebwerks oder auch nur Teile davon entfernt werden müssen.

6. Vorrichtung nach einem der vorhergehenden Ansprüche,
**dadurch gekennzeichnet, dass**
zur Anbindung an ein Hebezeug ein entlang des Querträgers (10) verschiebbarer Schlitten (12) mit einem Anbindungspunkt (13) für ein Hebezeug vorgesehen ist.

7. Vorrichtung nach Anspruch 6,
**dadurch gekennzeichnet, dass**
eine selbstsperrende Mechanik (14, 15, 16) zum Verschieben des Schlittens (13) entlang des Querträgers (10) vorgesehen ist, die vorzugsweise auch während der Verwendung der Vorrichtung (1) betätigbar ist.

8. Vorrichtung nach Anspruch 7,
**dadurch gekennzeichnet, dass**
die Mechanik eine Gewindespindel (14) und/oder ein Umlenkgetriebe (15) umfasst.

9. Verfahren zur Montage und Demontage von Bauteilen eines Flugzeugtriebwerks,
**dadurch gekennzeichnet, dass**
zur Montage und Demontage wenigstens eines Bauteils eine Vorrichtung (1) gemäß einem der vorhergehenden Ansprüche im gestreckten Zustand des Gelenks (24) der Hauptstrebe (20) verwendet wird und sich das Flugzeugtriebwerk am Flügel eines Flugzeugs befindet.

10. Verfahren zur Montage und Demontage von Bauteilen eines Flugzeugtriebwerks,
**dadurch gekennzeichnet, dass**
ein mithilfe der Vorrichtung (1) montiertes oder demontiertes Bauteil des Getriebesystems für die erste Schaufelblattstufe des Flugzeugtriebwerks, die Schaufelblattnabe, ein Lagergehäuse und/oder ein Lager ist.
